Europäisches Patentamt

European Patent Office

Office européen des brevets

(19)

(11) Veröffentlichungsnummer: **0 125 416**
B1

(12) # EUROPÄISCHE PATENTSCHRIFT

(45) Veröffentlichungstag der Patentschrift:
28.12.88

(51) Int. Cl.⁴: **B 23 P 15/00**, B 62 K 21/24

(21) Anmeldenummer: **84102644.6**

(22) Anmeldetag: **10.03.84**

(54) Verfahren zur Herstellung eines zylindrischen Spannkeils und Matrize zur Herstellung des zylindrischen Spannkeils.

(30) Priorität: 06.05.83 DE 3316565

(43) Veröffentlichungstag der Anmeldung:
21.11.84 Patentblatt 84/47

(45) Bekanntmachung des Hinweises auf die Patenterteilung:
28.12.88 Patentblatt 88/52

(84) Benannte Vertragsstaaten:
FR GB IT NL

(56) Entgegenhaltungen:
DE-A- 3 118 215
GB-A- 1 474 876
GB-A- 2 091 141
US-A- 3 425 312
US-A- 3 644 973
US-A- 3 805 653

(73) Patentinhaber: E + W Gloerfeld GmbH & Co. KG, Am
Raffelnberg 1-3, D-5880 Lüdenscheid 6 (DE)

(72) Erfinder: Rost, Heinz, Oppelner Weg 8, D-5883 Kierspe
(DE)

(74) Vertreter: Hassler, Werner, Dr.,
Postfach 17 04 Asenberg 62, D-5880 Lüdenscheid (DE)

## Beschreibung

Die Erfindung betrifft ein Verfahren zur Herstellung eines zylindrischen Spannkeils für die Festlegung eines Lenkerschaftrohres im Gabelrohr eines Zweiradfahrzeuges, der als napfförmiges Hohlteil ausgebildet ist und dessen Umfangswand eine geneigt zur Achse des Hohlteils verlaufende Ringspannfläche bildet, wobei ein zylindrischer Napf und anschliessend die geneigte Ringspannfläche durch Fliesspressen geformt werden.

Ein solches Verfahren ist aus der DE-A-3 118 215 bekannt. Bei dem bekannten Verfahren wird ein keilsegmentförmiger Wandungsabschnitt des Napfes nach innen gepresst, so dass sich eine stufenförmige, keilförmige Ringspannfläche ergibt. Das nach innen gepresste segmentförmige Wandungsteil verengt einerseits den freien Innenquerschnitt des Spannkeils und steht andererseits über die Ringspannfläche über. Dieses kann beim Einbau des Lenkerschaftrohres zu Schwierigkeiten führen, weil das keilförmig abgeschnittene Stirnende des Lenkerschaftrohres beim Einführen in das Gabelrohr an diesem Wandungsabschnitt anstossen kann, so dass ein einwandfreies Aufsitzen auf der Ringspannfläche nicht mehr möglich ist.

Aufgabe der Erfindung ist eine solche Gestaltung des Verfahrens, dass bei der Formung der Werkstoff ins Innere des Spannkeils verdrängt werden kann, damit kein Werkstoff über die Ringspannfläche übersteht, so dass die Ringspannfläche für das Aufsetzen der Keilfläche des Lenkerschaftrohres im Gabelrohr in vollem Umfang zur Verfügung steht und der freie Innenquerschnitt des Spannkeils möglichst gross bleibt.

Diese Aufgabe wird nach der Erfindung durch folgende Massnahmen gelöst:

a) aus der Zylinderwandung des Napfes wird unter Bildung eines in axialer Richtung etwa bis zum Napfboden reichenden Fensters ein Lappen ausgeschnitten und radial nach aussen gebogen;

b) beim anschliessenden Formen der geneigt zur Achse verlaufenden Ringspannfläche wird zunächst der Lappen abgetrennt und dann werden die Ränder des Fensters nach innen umgefaltet und an die Innenwand des Spannkeils angelegt.

Das beschriebene Verfahren unterscheidet sich insofern vom Stand der Technik, als der Raum oberhalb der keilförmigen Ringspannfläche und der Innenraum des Spannkeils im wesentlichen frei bleiben, so dass auch bei erheblichen Massschwankungen und Toleranzen ein ausreichender Raum zum Aufsetzen des Lenkerschaftrohres in dem Gabelrohr verbleibt. Das Lenkerschaftrohr kann immer ungehindert auf der Ringspannfläche aufsitzen. Das Verfahren nach der Erfindung stellt eine ausreichende Wegnahme von Werkstoff durch die Ausbildung des Fensters sicher, damit in der nachfolgenden Fliesspressstufe der Werkstoff ins Innere des Spannkeils verdrängt werden kann. Das Verfahren geht von zylindrischen Rohlingen aus, die von einem Draht abgeschnitten werden. Die Fliesspressteile lassen sich anschliessend im Bodenbereich auf der Aussenfläche rändeln und härten. Diese Bearbeitung ist ohne Schwierigkeiten möglich.

Zur Lösung der genannten Aufgabe bezieht sich die Erfindung ferner auf ein Presswerkzeug zur Durchführung des beschriebenen Verfahrens mit mehreren Stationen in einer Matrize und mit entsprechenden Pressstempeln, nämlich mindestens einer Napfstation und einer Formstation, deren Matrize eine zur Pressstempelachse geneigte Ringkeilfläche aufweist, gekennzeichnet durch folgende Merkmale:

a) eine zwischen Napfstation und Formstation angeordnete Schneidstation besitzt innerhalb der Matrize einen zylindermantelförmigen Einsatz mit einem axial verlaufenden Schlitz in dem Zylindermantel und der zugeordnete Pressstempel besitzt eine Schneidnase, die in den genannten Schlitz hineinreicht und den Lappen ausschneidet;

b) die Ringkeilfläche ist an einen Kern ausgebildet, der in seinem Mittelteil ein als Faltführung ausgebildetes Mehrkantprofil aufweist;

c) innerhalb der Formstation ist ein den Kern umgebender ringmantelförmiger Einsatz mit einer Abscherkante für den Lappen angeordnet.

Dieses Presswerkzeug ermöglicht eine Formung des Spannkeils in mehreren Fliesspressstufen, wobei zunächst zur Bildung eines Fensterausschnitts ein Lappen freigeschnitten wird. In der Formstation wird dieser Lappen abgeschert und die Keilfläche mit dem grossen Fensterausschnitt geformt, dessen Ränder an die Innenwand des Spannkeils angepresst sind. Dadurch bleibt nahezu der gesamte Innenquerschnitt des Spannkeils frei. Über die Ringspannfläche steht kein Werkstoff über, so dass sich das Lenkerschaftrohr in allen Fällen sauber auf die Ringspannfläche aufsetzen kann. Der Spannkeil lässt sich sowohl nach der Technik des Vorwärtsfliesspressens als auch des Rückwärtsfliesspressens herstellen. Die Abscherkante schert den Lappen beim Eintritt des Werkstücks in die Formstation ab. Die Abscherkante kann gegenüber der Stirnfläche des Einsatzes innerhalb eines Schlitzes zurückgesetzt sein.

Eine Ausführungsform der Erfindung wird im folgenden unter Bezugnahme auf die anliegenden Zeichnungen erläutert, in denen darstellen:

Fig. 1 einen Längsschnitt durch mehrere Stationen des Presswerkzeugs,

Fig. 2 einen Querschnitt durch die Schneidstation,

Fig. 3 eine Ansicht der Formstation,

Fig. 4 eine Ansicht des Kerns der Formstation,

Fig. 5 eine Darstellung des in der Napfstation erzeugten Napfes,

Fig. 6 einen Teilschnitt durch den in der Schneidstation verformten Napf,

Fig. 7 eine Umklappung zu Fig. 6,

Fig. 8 eine Ansicht des fertigen Spannkeils,

Fig. 9 einen Schnitt zu Fig. 8 und

Fig. 10 eine Umklappung zu Fig. 9.

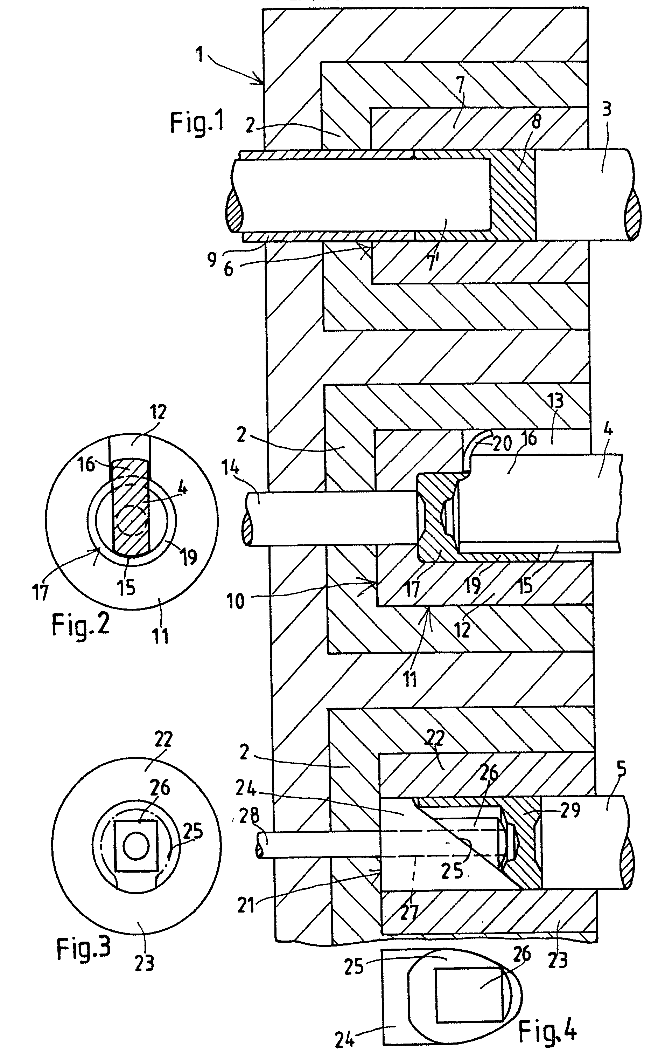

Fig. 1 zeigt einen Ausschnitt des Aufspannrahmens 1 des Matrizenteils eines Presswerkzeugs mit mehreren Stationen. In Fig. 1 sind nur drei Stationen dargestellt, die im Rahmen der Erfindung wichtig sind. Der Aufspannrahmen 1 weist mehrere Matrizenfassungen 2 auf, in die schliesslich die Einsätze, Kerne und sonstigen Formelemente der einzelnen Stationen eingesetzt sind.

Dem Aufspannrahmen 1 steht ein nicht dargestellter Pressenkopf gegenüber, in dem Pressstempel 3, 4, 5 für die verschiedenen Stationen sitzen. Diese Pressstempel 3, 4, 5 arbeiten mit den jeweiligen Stationen des Matrizenteils zusammen.

In nicht dargestellten Vorstationen wird ein Draht gerichtet. Zylindrische Rohlinge werden abgeteilt. Die erste dargestellte Station ist eine Napfstation 6 und besteht aus Matrizenfassung 2, Matrize 7, Fliesspressstempel 7' und Aushebehülse 9. Der zugehörige Pressstempel 3 ist als zylindrischer Stempel ausgebildet. Diese Napfstation 6 dient zur Ausbildung eines zylindrischen Napfes 8 aus dem zylindrischen oder stabförmigen Vorformteil.

Eine zweite Station ist eine Schneidstation 10 und enthält einen Einsatz 11 mit einer Bodenwand und einem Zylindermantel 12. In dem Zylindermantel 12 ist ein in axialer Richtung, also parallel zu einer Erzeugenden des Zylindermantels, verlaufender Schlitz 13 ausgebildet, der oberhalb der Bodenwand des Einsatzes 11 endigt. Innerhalb des Einsatzes 11 ist ein Aushebestift 14 geführt.

Der zugehörige Pressstempel 4 hat einen etwa rechtkantigen Umriss und ist als Schneidstempel ausgebildet. Der Pressstempel 4 besitzt an einer Schmalseite eine Bogenfläche 15, die dem Innenprofil des Napfes 8 angepasst ist. An der gegenüberliegenden Längsseite ist eine stegförmige Schneidnase 16 ausgebildet, die beim Pressenhub in den Schlitz 13 hineintritt und mit den Schlitzrändern scherenartig zusammenwirkt. Man erkennt diese Funktionsweise deutlich aus den Fig. 1 und 2. Beim Einführen des Pressstempels 4 schneidet die Schneidnase 16 ein Fenster 18 (vgl. 6 und 7) aus der Zylinderwand 19, so dass ein geschlitzter Napf 17 gebildet wird. Der bei der Bildung des Fensters 18 freigetrennte Lappen 20 wird in den Schlitz 13 hineingedrängt und hängt zunächst fussseitig mit der Querkante des Fensters 18 zusammen.

Eine dritte Station oder Formstation 21 enthält innerhalb der Matrizenfassung 2 einen zylindrischen Einsatz 22 mit einer Abscherkante 23. Innerhalb des Einsatzes 22 ist ein Kern 24 angeordnet. Dieser Kern 24 weist einerseits eine geneigt zur Kernachse ausgerichtete, umlaufende Ringkeilfläche 25 auf. Im Mittelteil des Kerns ist ein Mehrkantprofil 26 als Faltführung ausgebildet. Dieses Mehrkantprofil 26 lässt allseitig zur Innenfläche der Zylinderwand 19 einen Abstand frei. Die Faltkanten 32 haben einen Abstand voneinander, der der Breite des Fensters 18 etwa gleich ist. In einem zentralen Durchgang 27 ist ein Aushebestift 28 angeordnet. Der Pressstempel 5 ist im wesentlichen zylindrisch ausgebildet.

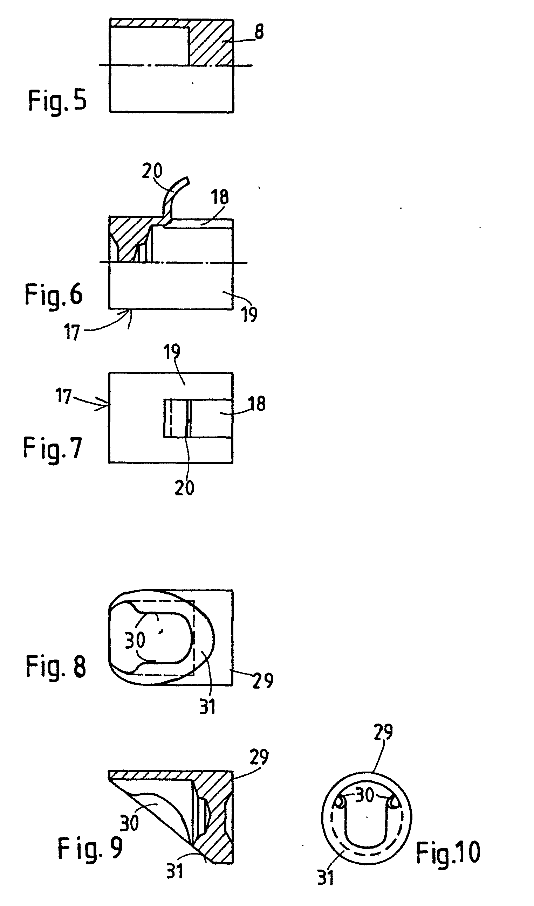

Innerhalb der Formstation 21 wird beim Einpressen des Spannkeils 29 der anhängende Lappen 20 an der Abscherkante 23 getrennt. Jeweils die seitlichen Ränder des Fensters 18 stossen an die Ringkeilfläche 25 des Kerns 24 und werden

gegen die Achse des Kerns 24 umgelenkt. Die umgelenkten Kanten werden von den Faltkanten 32 erfasst und dadurch um 180 °C umgefaltet, so dass entsprechende Lappen 30 (Fig. 8 bis 10) an die Innenwand des Spannkeils 29 angelegt werden. Das Mehrkantprofil 26 ist rechtkantig oder sechskantig ausgebildet.

Die beschriebene Formstation arbeitet nach der Technik des Vorwärtsfliesspressens. Man kann die Station auch nach der Technik des Rückwärtsfliesspressens auslegen, wonach der Napfboden in die Matrize eingeführt wird.

Die Formung des Spannkeils ist nochmals zusammenfassend anhand der Fig. 5 bis 10 erläutert.

In nicht dargestellten Vorstationen wird von einem Draht ein zylindrisches Vorformteil geformt. Dieses Vorformteil wird dann in die Napfstation 6 eingeführt und dort zu einem Napf 8 nach Fig. 5 umgeformt. Diese Napfformung erfolgt in üblicher Weise. Sodann wird während des Öffnungshubes der Presse der von der Aushebehülse 9 ausgestossene Napf 8 von einer Zange erfasst, gewendet und der Schneidstation 10 vorgelegt. Beim Schliessen der Presse wird der Napf weiterverformt. Im Sinne der Erfindung wird ein Lappen 20 zur Bildung eines Fensters 19 in der Zylinderwand 19 des Napfes 17 freigeschnitten, vgl. Fig. 6 und 7.

In der nächsten Bearbeitungsstufe wird der Napf 17 von einer Zange erfasst, gewendet und der Formstation 21 vorgelegt. Beim Einpressen in die Formstation 21 durch den Pressstempel 5 wird der Lappen 20 durch die Abscherkante 23 abgetrennt. Der Lappen fällt ab. Die Ränder des Fensters 18 stossen an die Ringkeilfläche 25 des Kerns 24 an und werden dadurch gegen die Faltkanten 32 abgelenkt und weiter auf die Innenfläche des Napfes bzw. Spannkeils 29 gefaltet. Dadurch wird eine vollständige Umfaltung der Lappen 30 gesichert, so dass die Lappen 30 an der Innenfläche des Spannkeils 29 anliegen. Die Ringkeilfläche 25 des Kerns 24 formt die Ringspannfläche 31 aus.

Man kann auf der Aussenfläche im Bereich des Napfbodens eine Rändelung anbringen. Auch ist eine Härtung des Spannkeils möglich.

Über die keilförmige Ringspannfläche 31 des Spannkeils 29 steht kein Werkstoff über, so dass die Ringspannfläche 31 für das Aufsetzen der Keilfläche des Gabelrohrs im vollen Umfang zur Verfügung steht. Die Keilfläche des Gabelrohrs kann sich jeweils auf der Ringspannfläche 31 ausrichten. Diese Ausrichtung wird nicht durch Wandabschnitte oder dergleichen behindert. Auch der Innenraum des Spannkeils 31 behält einen grossen lichten Querschnitt, so dass der Schaft der Lenkerinnenschraube ohne Schwierigkeiten hindurchgeführt werden kann. Durch Anziehen der Lenkerinnenschraube wird der Spannkeil an die Keilfläche des Lenkerschaftrohres angezogen, so dass eine kraftschlüssige Verspannung innerhalb des Gabelrohres erfolgt.

Es ist überraschend, dass der in den Fig. 8 bis 10 dargestellte Spannkeil allein durch Fliesspressen in der beschriebenen Weise geformt ist. Wesentlich hierfür ist der Ausschnitt des Fensters 18.

Hierdurch wird in ausreichendem Masse Werkstoff weggenommen, damit der verbleibende Werkstoff in den Innenraum des Spannkeils 29 verdrängt werden kann und damit über die Ringspannfläche 31 kein Werkstoff übersteht.

**Patentansprüche**

1. Verfahren zur Herstellung eines zylindrischen Spannkeils (29) für die Festlegung eines Lenkerschaftrohres im Gabelrohr eines Zweiradfahrzeuges, der als napfförmiges Hohlteil ausgebildet ist und dessen Umfangswand eine geneigt zur Achse des Hohlteils verlaufende Ringspannfläche (31) bildet, wobei ein zylindrischer Napf und anschliessend die geneigte Ringspannfläche durch Fliesspressen geformt werden, gekennzeichnet durch folgende Massnahmen:

a) aus der Zylinderwandung (19) des Napfes (17) wird unter Bildung eines in axialer Richtung etwa bis zum Napfboden reichenden Fensters (18) ein Lappen (20) ausgeschnitten und radial nach aussen gebogen;

b) beim anschliessenden Formen der geneigt zur Achse verlaufenden Ringspannfläche (31) wird zunächst der Lappen (20) abgetrennt und dann werden die Ränder des Fensters (18) nach innen umgefaltet und an die Innenwand des Spannkeils angelegt.

2. Presswerkzeug zur Durchführung des Verfahrens nach Anspruch 1 mit mehreren Stationen in einer Matrize (2) und mit entsprechenden Pressstempeln (3, 4, 5), nämlich mindestens einer Napfstation (6) und einer Formstation (21), deren Matrize eine zur Pressstempelachse geneigte Ringkeilfläche (25) aufweist, gekennzeichnet durch folgende Merkmale:

a) eine zwischen Napfstation und Formstation angeordnete Schneidstation (10) besitzt innerhalb der Matrize einen zylidermantelförmigen Einsatz (11) mit einem axial verlaufenden Schlitz (13) in dem Zylindermantel (12), und der zugeordnete Pressstempel (4) besitzt eine Schneidnase (16), die in den genannten Schlitz (13) hineinreicht;

b) die Ringkeilfläche (25) ist an einen Kern (24) ausgebildet, der in seinem Mittelteil ein als Faltführung ausgebildetes Mehrkantprofil (26) aufweist;

c) innerhalb der Formstation (21) ist ein den Kern (24) umgebender ringmantelförmiger Einsatz (22) mit einer Abscherkante (23) für den Lappen (20) angeordnet.

**Claims**

1. A method of producing a cylindrical clamping key (29) for fixing a handlebar stem tube in the fork tube of a twowheel vehicle which is constructed as a cup-shaped hollow member, its peripheral wall forming an annular clamping surface (31) extending at an angle to the axis of the hollow part, a cylindrical cup and then the inclined annular clamping face being formed by extrusion, characterised by the following measures:

a) from the cylindrical wall (19) of the cup (17), a lug (20) is cut out to form a window (18) extending in an axial direction substantially as far as the bottom of the cup, the lug being bent radially outwardly;

b) during subsequent forming of the annular clamping face (31) which extends at an angle to the axis, first of all the lug (20) is separated and then the edges of the window (18) are folded over inwardly and applied against the inside wall of the clamping key.

2. A moulding tool for carrying out the method according to Claim 1, with a plurality of stations in a female die (2) and with corresponding male die parts (3, 4, 5), namely at least one cup station (6) and a moulding station (21), the female die part of which comprises an annular keying surface (25) which is inclined in relation to the axis of the male die part, characterised by the following features:

a) a cutting station (10) disposed between the cup station and the moulding station has, inside the female die part, a cylindrical insert (11) with an axially extending slit (13) in the cylindrical shell (12) and the associated male die part (4) has a cutting nose (16) which extends into the said slit (13) and cuts out the lug;

b) the annular keying surface (25) is constructed on a core (24) which has in its middle part a polygonal profile (26) which is constructed as a fold guide;

c) inside the mould station (21) there is, surrounding the core (24), an annular shell-like insert (22) with a shearing edge (23) for the lug (20).

**Revendications**

1. Procédé de fabrication d'un coin de serrage cylindrique (29) pour la fixation d'un tube de guidon dans un tube de fourche d'un véhicule à deux roues, ce coin de serrage étant réalisé sous la forme d'une pièce creuse en forme de cuvette et son bord périphérique formant une surface de serrage annulaire (31) qui s'étend de manière inclinée par rapport à l'axe de la pièce creuse, une cuvette cylindrique et ensuite la surface de serrage annulaire inclinée étant façonnées par extrusion, caractérisé par les mesures suivantes:

a) une patte (20) est découpée dans la paroi cylindrique (19) de la cuvette (17), avec formation d'une fenêtre (18) qui va, suivant une direction axiale, approximativement jusqu'au fond de la cuvette, et elle est recourbée radialement vers l'extérieur,

b) la patte (20) est tout d'abord séparée au cours de la mise en forme ultérieure de la surface de serrage annulaire (31) qui s'étend de manière inclinée par rapport à l'axe, et ensuite les bords de la fenêtre (18) sont repliés vers l'intérieur et appliqués sur la paroi interne du coin de serrage.

2. Outil de presse pour la mise en œuvre du procédé suivant la revendication 1, comprenant plusieurs stations dans une matrice (2) et des poinçons correspondants (3, 4, 5), c'est-à-dire au moins une station de formation de cuvette (6) et une station de mise en forme (21), dont la matrice présente une surface de coin annulaire (25) inclinée par rapport à l'axe du poinçon, caractérisé par les particularités suivantes:

a) une station de coupe (10) agencée entre la station de formation de cuvette et la station de mise en forme comporte, à l'intérieur de la matrice, un élément inséré en forme d'enveloppe cylindrique (11) qui présente une fente (13) disposée axialement dans l'enveloppe cylindrique (12), et le poinçon adjoint (4) comporte une saillie de coupe (16) qui pénètre dans la fente précitée (13),

b) la surface de coin annulaire (25) est réalisée sur un mandrin (24) qui présente, dans sa partie centrale, un profil polygonal (26) réalisé sous la forme d'un guidage de pliage,

c) un élément inséré (22) en forme d'enveloppe annulaire, qui entoure le mandrin (24) et présente un bord de cisaillement (23) pour la patte (20), est agencé à l'intérieur de la station de mise en forme (21).

Fig.1

Fig.2

Fig.3

Fig.4

Fig.5

Fig.6

20

18

17

19

Fig.7

19

17

18

20

Fig. 8

30

29

31

Fig. 9

29

30

31

29

30

31

Fig.10